# EUROPÄISCHE PATENTSCHRIFT

(11) **EP 1 373 032 B1**
(45) Veröffentlichungstag und Bekanntmachung des Hinweises auf die Patenterteilung: **17.08.2005**
(21) Anmeldenummer: 01984715.1
(22) Anmeldetag: 14.12.2001
(51) Int. Cl.: B60S 1/08

(54) **WISCHERANLAGE MIT ZWEI SCHEIBENWISCHERN**
WIPER DEVICE WITH TWO WINDSHIELD WIPERS
SYSTEME D'ESSUYAGE COMPRENANT DEUX ESSUIE-GLACE

(30) Priorität: 21.03.2001 DE 10113678
(43) Veröffentlichungstag der Anmeldung: 02.01.2004
(73) Patentinhaber: ROBERT BOSCH GMBH, 70442 Stuttgart (DE)
(72) Erfinder: MERKEL, Wilfried, 77876 Kappelrodeck (DE); MICHENFELDER, Gebhard, 77839 Lichtenau (DE); FLEISCHER, Claus, 77815 Buehl (DE)
(86) Internationale Anmeldenummer: PCT/DE2001/004764
(87) Internationale Veröffentlichungsnummer: WO 2002/076796

(56) Entgegenhaltungen:
- EP-A- 0 952 054
- DE-A- 3 208 121
- FR-A- 2 785 246
- US-A- 5 568 026

## Beschreibung

### Stand der Technik

Die Erfindung geht von einer Wischeranlage mit zwei Scheibenwischern nach dem Oberbegriff des Anspruchs 1 aus.

Zum Reinigen von Windschutzscheiben an Kraftfahrzeugen sind verschiedene Wischfeldtypen und Antriebsvorrichtungen bekannt. Bei den Wischfeldern unterscheidet man hauptsächlich Einhebelwischfelder und Zweihebelwischfelder. Bei den Zweihebelwischfeldern können die Wischhebel der Scheibenwischer im Gleichlauf oder im Gegenlauf angetrieben werden.

In der Regel besitzt die Antriebsvorrichtung auch für zwei Scheibenwischer nur einen Wischermotor, dessen rotierende Antriebsbewegung seiner Abtriebswelle über ein räumliches Kurbelgetriebe in eine oszillierende Schwenkbewegung der Antriebswellen der Scheibenwischer übersetzt wird. Neuere Wischermotoren sind mit einer Elektronik ausgestattet, die eine reversierende Antriebsbewegung der Abtriebswelle regeln. Die Elektronik ermöglicht ferner eine Wischwinkelsteuerung mit einer dynamischen, lastabhängigen Wischwinkelkorrektur und Wischgeschwindigkeitsregelung. Dadurch kann ein größeres Nennwischfeld auf der Windschutzscheibe erzeugt werden. Außerdem lässt die Elektronik verschiedene Wischfunktionen und Positionen zu, z.B. eine erweiterte Parkstellung, eine Serviceposition zum Wechsel eines Wischblatts, eine Intervallparkstellung und eine alternierende Parkstellung zur Wischblattentlastung.

Die Wischermotoren mit Elektronik besitzen ein Steuergerät mit Sensoren zur Lage- und Geschwindigkeitsregelung der Abtriebswelle sowie einem Mikrocontroller zur Lageerkennung der Abtriebswelle. Das führt zu höheren Kosten für das Steuergerät und erfordert zusätzlichen Bauraum im Deckel.

Zum Wischen großer Windschutzscheiben kommen häufig Wischanlagen mit gegenläufigen Scheibenwischern zum Einsatz. Werden diese von einem Wischermotor angetrieben, ergibt sich neben einer großen Baugröße entsprechend der Fahrzeugbreite ein großer Bauraumbedarf in der Fahrzeugmitte. Ferner ist der kinematische Aufbau mit oder ohne Zwischenlager aufwändig und erfordert einen großen, leistungsstarken Wischermotor. Die vielen einzelnen mechanischen Komponenten verursachen große statische Wischwinkeltoleranzen, zu denen dynamische Wischwinkeltoleranzen hinzukommen, die durch Elastizitäten der mechanischen Komponenten sowie der Träger- und Befestigungselemente bedingt sind.

Um einen einfacheren kinematischen Aufbau und dadurch geringere Wischwinkeltoleranzen zu erreichen, werden Wischeranlagen mit zwei Wischermotoren verwendet, die im Bereich der Wischerlager angeordnet sind und somit keinen Bauraum im mittleren Bereich der Windschutzscheibe beanspruchen. Aus der FR-A-2 785 246 ist eine Wischeranlage mit zwei Scheibenwischern und zwei Wischermotoren bekannt, die die Scheibenwischer antreiben und denen jeweils eine elektronische Steuereinheit und eine Sensorik zugeordnet sind. Die Wischermotoren sind beide als Rundläufermotoren ausgebildet. Die Steuereinheit eines jeden Wischermotors erhält regelmäßig eine Information über die Position des Rotors des anderen Wischermotors. Die Steuereinheiten werten die Informationen über die Position der Rotoren so aus, dass eine Kollision zwischen den Scheibenwischern vermieden wird.

### Vorteile der Erfindung

Nach der Erfindung besitzt der zweite Wischermotor keine Steuereinheit, sondern nur eine Sensorik zum Erfassen der absoluten und relativen Drehlage seiner Abtriebswelle. Die Sensorik erzeugt entsprechende Signale für die Steuereinheit des ersten Wischermotors, mit der sie über eine Kommunikationsschnittstelle verbunden ist. Die Steuereinheit bildet in vorteilhafter Weise aus den Signalen einen Sollwert für eine Regelung der Drehlage und Drehgeschwindigkeit des ersten Wischermotors, sodass dieser in Abhängigkeit der Drehlage und der Drehgeschwindigkeit der Abtriebswelle des zweiten Wischermotors geregelt wird. Der erste Wischermotor, der als so genannter "Master" arbeitet, ist zweckmäßigerweise, aber nicht zwingenderweise, auf der Fahrerseite des Fahrzeugs angeordnet und wird vorzugsweise im Reversierbetrieb betrieben. Der zweite Wischermotor, auch "Slave" genannt, ist dementsprechend auf der Beifahrerseite montiert.

Durch diese erfindungsgemäßen Maßnahmen werden die Kosten und der Aufwand für die gesamte Wischeranlage mit zwei Wischermotoren sehr gering gehalten. Außerdem erfordert der zweite Wischermotor weniger Bauraum, da er keine eigene elektronische Steuereinheit besitzt, insbesondere keinen Mikrokontroller. Trotzdem steht auf der Fahrerseite die volle Funktion des Reversiermotors zur Verfügung, z.B. eine Wischwinkelkorrektur, erweiterte Parkstellung usw. Schließlich ist ein Sicherheitskonzept möglich, mit dem u.a. die Kollision der Scheibenwischer vermieden wird. Der erste Wischermotor besitzt zur Kommunikation und Leistungssteuerung des zweiten Wischermotors eine Schnittstelle oder eine Direktverdrahtung, über die auch die Signale der Sensorik des zweiten Wischermotors geleitet werden können.

In vorteilhafter Weise ist für die Wischgeschwindigkeiten des zweiten Wischermotors ein Leistungsschalter vorgesehen, der von der Steuereinheit des ersten Wischermotors angesteuert wird. Dabei ist der zweite Wischermotor zweckmäßigerweise ein permanent erregter Dreibürsten-Gleichstrommotor mit einer Getriebestufe, wobei die Wischgeschwindigkeiten des zweiten Wischermotors zweckmäßigerweise über die Bürstenbestromung geschaltet werden. Die Sensorik zum Erfassen der Lage der Drehgeschwindigkeit der Abtriebswelle des zweiten Wischermotors besitzt segmentierte Permanentmagnete mit zugeordneten Hallsensoren, die digital kodierte Signale erzeugen. Dabei wird von einem Hallsensor die Parklage des Scheibenwischers erfasst, die durch die Lage eines Segments eines Permanentmagneten gekennzeichnet ist, während sich die augenblickliche Winkellage des Scheibenwischers durch Hinzuzählen von inkrementalen Werten ergibt, die sich aus Zählimpulsen eines weiteren Hallsensors in Verbindung mit Permanentmagneten ergeben, die auf einem Kreisumfang eines rotierenden Bauteils angeordnet sind.

Alternativ zum Signalgeber für das Parklagensignal kann die Sensorik einen Absolutgeber haben, vorzugsweise einen AMR-Sensor (Anisotrop Magnetoresistiv).

Bei einer weiteren vorteilhaften Variante umfasst die Sensorik zum Erfassen der Lage und der Drehgeschwindigkeit der Abtriebswelle eine segmentierte, dreispurige Kontaktscheibe mit Schleifkontakten, die an einem mit der Abtriebswelle drehenden Bauteil, z.B. an einem Schneckenrad angeordnet sind. Die mittlere Kontaktspur dient zur Spannungsversorgung über einen Schleifer, während eine benachbarte Spur eine Kontaktfläche aufweist, die von einem weiteren Schleifer abgetastet wird und ein Parklagensignal erzeugt, indem der Stromkreis zum mittleren Schleifer geschlossen wird. Die andere benachbarte Spur weist gleichmäßig über den Umfang verteilte Kontaktflächen auf, die in gleicher Weise in Verbindung mit einem weiteren Schleifer Zählimpulse für eine inkrementale Positionserkennung aufweisen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

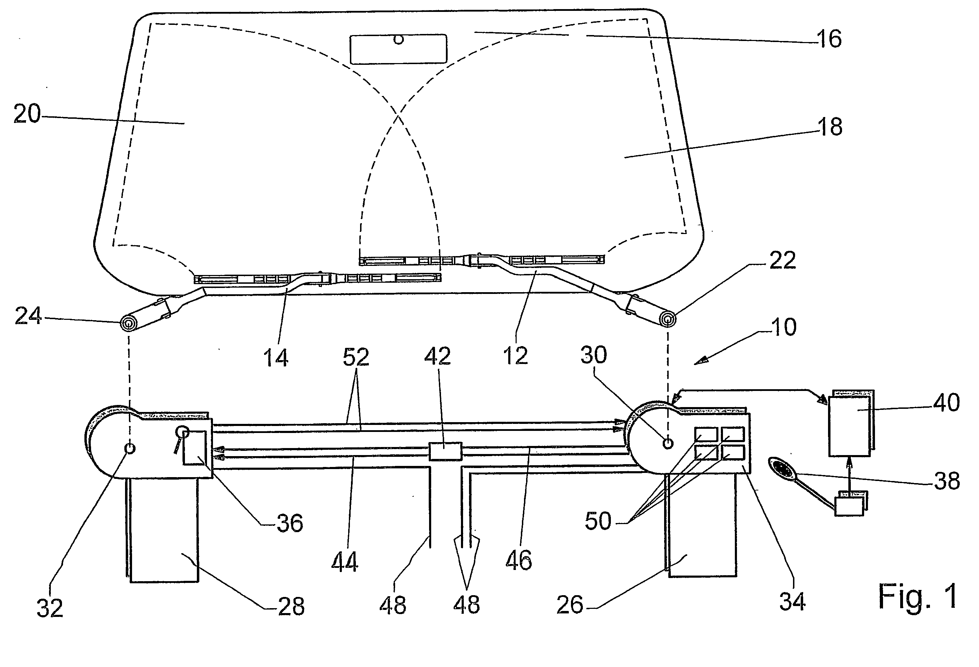

- Fig. 1: eine schematische Darstellung einer erfindungsgemäßen Wischeranlage,
- Fig. 2: einen schematischen Teilschnitt durch eine Sensorik mit Hallsensoren für eine Drehlage und Drehgeschwindigkeit,
- Fig. 3: einen schematischen Schnitt entsprechend der Linie III-III in Fig. 2,
- Fig. 4: einen schematischen Teilschnitt durch eine Sensorik mit einer dreispurigen Kontaktscheibe für eine Drehlage und Drehgeschwindigkeit und
- Fig. 5: eine Draufsicht auf die dreispurige Kontaktscheibe nach Fig. 4.

### Beschreibung der Ausführungsbeispiele

Die Wischeranlage 10 besitzt zwei Scheibenwischer 12, 14, die bei einer Schwenkbewegung um ihre Antriebswellen 22, 24 Wischfelder 18, 20 auf einer Windschutzscheibe 16 eines nicht näher dargestellten Fahrzeugs überstreichen.

Ein erster Wischermotor 26 treibt über seine Abtriebswelle 30 die Antriebswelle 22 des Scheibenwischers 12 auf der Fahrerseite des Fahrzeugs an, während ein zweiter Wischermotor 28 mit seiner Abtriebswelle 32 die Antriebswelle 24 des Scheibenwischers 14 auf der Beifahrerseite antreibt. Der erste Wischermotor 26, der als Reversiermotor ausgelegt ist, besitzt eine elektronische Steuereinheit 34 mit Steuerelementen 50 zur Regelung des Reversierbetriebs und Drehgeschwindigkeit sowie der Drehlage der Abtriebswelle 30 und damit des Scheibenwischers 12. Die Steuerelemente 50 umfassen Mittel zur Auswertung der Eingangssignale und hinterlegten Kennfelder sowie eine Sensorik 36 zum Erfassen der Drehlage und Drehgeschwindigkeit der Abtriebswelle 30, z.B. einen Mikrokontroler, einen AMR-Sensor usw.

Der zweite Wischermotor 28, der ein standardmäßiger permanenterregter Dreibürsten-Gleichstrommotor mit einer Getriebestufe und als Rundläufermotor ausgebildet ist, verfügt nur über eine Sensorik 36 zum Erfassen der absoluten und relativen Drehlage seiner Abtriebswelle 32. Die Wischermotoren 26, 28 sind über Versorgungsleitungen 48 an das Bordnetz des Fahrzeugs angeschlossen. Die Wischeranlage 10 wird mittels eines Bedienhebels 38 aktiviert, die über eine Zentralelektronik 40 ein Signal an die Steuereinheit 34 sendet. Entsprechend dem Signal schaltet die Steuereinheit 34 über einen Leistungsschalter 42 eine erste Leistungsstufe 44 oder eine zweite Leistungsstufe 46 des zweiten Wischermotors 28, wobei zweckmäßigerweise die Drehgeschwindigkeit über die Bestromung der Bürsten erfolgt.

Die Sensorik 36 erfasst die Drehlage der Abtriebswelle 32 des zweiten Wischermotors 28, insbesondere die, die der Parklage des Scheibenwischers 14 entspricht, und erzeugt ferner Zählimpulse, mit denen eine inkrementale Positionserkennung möglich und die Drehgeschwindigkeit bestimmt werden kann. Die erzeugten Signale werden über Signalleitüngen 52 vom zweiten Wischermotor 28 an die Steuereinheit 34 des ersten Wischermotors 26 geleitet, die aus diesen Signalen einen Sollwert für die Drehlage und Drehgeschwindigkeit der Abtriebswelle 30 des ersten Wischermotors 26 bestimmt.

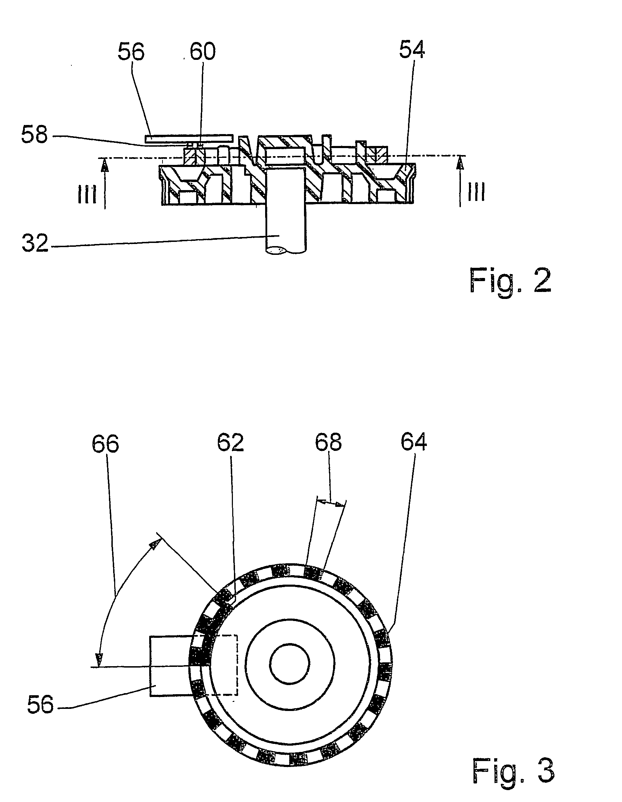

Die Fig. 2 und 3 sowie die Fig. 4 und 5 zeigen zwei vorteilhafte Versionen einer Sensorik 36 für die Drehlage und Drehgeschwindigkeit der Abtriebswelle 32 des zweiten Wischermotors 28. Die Abtriebswelle 32 wird in bekannter Weise vom Elektromotor über eine Schnecke und ein Schneckenrad 54 angetrieben. Auf dem Schneckenrad 54 sind auf Kreisbahnen segmentierte Permanentmagnete 62, 64 angeordnet, wobei der Permanentmagnet 62 ein Segment 66 von ca. vierzig Grad einnimmt und zur Bestimmung der Parklage dient. Die Permanentmagnete 64 sind auf der äußeren Kreisbahn gleichmäßig verteilt angeordnet und nehmen ein kleines Segment 68 ein. Der Permanentmagnet 62 der inneren Kreisbahn arbeitet mit einem Hallsensor 60 zusammen, während die Permanentmagnete 64 der äußeren Kreisbahn mit einem Hallsensor 58 zusammen arbeiten. Beide Hallsensoren sind auf einer gehäusefesten Leiterplatte 56 montiert und erzeugen ein Signal, sobald sie bei einer Drehbewegung der Abtriebswelle 32 bzw. des Schneckenrades 54 mit geringem Spiel und einem Permanentmagneten 62, 64 passiert werden. Dabei gibt das vom Permanentmagneten 62 erzeugte Signal die Parklage des Scheibenwischers an, während durch die Permanentmagnete 64 auf der äußeren Bahn Zählimpulse erzeugt werden, die in der Steuereinheit 34 zu einer inkrementalen Positionserkennung und zur Drehgeschwindigkeitsbestimmung ausgewertet werden.

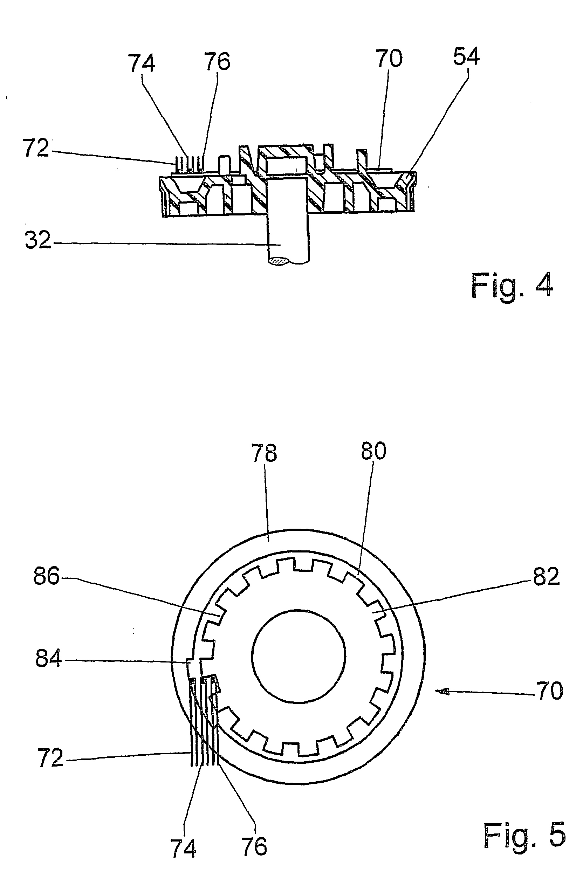

Die Ausführung der Sensorik 36 nach den Fig. 4 und 5 besitzt eine dreispurige Kontaktscheibe 70, die an dem Schneckenrad 54 befestigt ist., Die Spuren sind kreisförmig und konzentrisch zur Drehachse der Abtriebswelle 32 angeordnet. Dabei besitzt eine mittlere Spur 80, die von einem Schleifer 74 abgetastet wird, eine durchgehende Kontaktfläche und dient zur Spannungsversorgung der Sensorik 36. Die äußere Spur 78 besitzt eine Kontaktfläche 84, die sich über ein größeres Segment, etwa in der Größenordnung von vierzig Grad, erstreckt, und mit einem Schleifer 72 zusammenarbeitet. Wenn der Schleifer 72 die Kontaktfläche 84 berührt, wird der Stromkreis zum Schleifer 74 geschlossen und ein Signal ausgelöst, das die Parklage des Scheibenwischers 14 kennzeichnet. Die innere Spur 82 hat zahlreiche über den Umfang verteilte Kontaktflächen 86, die von einem Schleifer 76 abgetastet werden und Zählimpulse erzeugen, die zur inkrementalen Positionserkennung und zum Bestimmen der Drehgeschwindigkeit der Abtriebswelle 32 dienen. Die Sensorik 36 in den Ausführungen nach Fig. 2 und 3 sowie 4 und 5 sind kostengünstig und beanspruchen keinen zusätzlichen Bauraum.

## Patentansprüche

1. Wischeranlage (10) mit zwei Scheibenwischern (12, 14) und zwei Wischermotoren (26, 28), die die Scheibenwischer (12, 14) antreiben und von denen mindestens einem ersten Wischermotor (26) eine elektronische Steuereinheit (34) und eine Sensorik (36) zugeordnet sind, wobei mindestens die Steuereinheit (34) Informationen über Parameter des anderen Wischermotors (28) empfängt und der zweite Wischermotor (28) als Rundläufermotor ausgebildet ist, **dadurch gekennzeichnet, dass** der zweite Wischermotor (28) keine Steuereinheit, sondern nur eine Sensorik (36) zum Erfassen der absoluten und relativen Drehlage seiner Abtriebswelle (32) besitzt, die entsprechende Signale für die Steuereinheit (34) des ersten Wischermotors (26) erzeugt und der erste Wischermotor (26) durch die Steuereinheit (34) in Abhängigkeit der Drehlage und der Drehgeschwindigkeit der Abtriebswelle (32) des zweiten Wischermotors (28) in der Drehgeschwindigkeit und der Drehlage seiner Abtriebswelle (32) geregelt wird.

2. Wischeranlage (10) nach Anspruch 1, **dadurch gekennzeichnet, dass** der erste Wischermotor (26) als Reversiermotor ausgebildet ist.

3. Wischeranlage (10) nach einem der vorhergehenden Ansprüche, **dadurch gekennzeichnet, dass** die Sensorik (36) zum Erfassen der Drehlage und der Drehgeschwindigkeit der Abtriebswelle (32) segmentierte Permanentmagnete (62, 64) mit zugeordneten Hallsensoren umfasst, die ein Signal für eine Parklage des Scheibenwischers (12, 14) und die Zählimpulse zum inkrementalen Erkennen der Drehlage und zum Bestimmen der Drehgeschwindigkeit erzeugen.

4. Wischeranlage (10) nach einem der Ansprüche 1 oder 2, **dadurch gekennzeichnet, dass** die Sensorik (36) zum Erfassen der Drehlage und der Drehgeschwindigkeit der Abtriebswellen (32) einen Absolutgeber, vorzugsweise einen AMR-Sensor (anisotrop magnetoresistiv), umfasst.

5. Wischeranlage (10) nach einem der Ansprüche 1 oder 2, **dadurch gekennzeichnet, dass** die Sensorik (36) zum Erfassen der Drehlage und der Drehgeschwindigkeit der Abtriebswelle (32) eine segmentierte, dreispurige Kontaktscheibe mit Schleifkontakten umfasst, die an einem mit der Abtriebswelle (32) drehenden Bauteil angeordnet sind.

6. Verfahren zum Betrieb einer Wischeranlage (10) nach einem der vorhergehenden Ansprüche, **dadurch gekennzeichnet, dass** die Steuereinheit (34) aus der Drehlage und/oder Drehgeschwindigkeit der Abtriebswelle (32) des zweiten Wischermotors (28) einen Sollwert für die Drehlage und/oder Drehgeschwindigkeit der Abtriebswelle (30) des ersten Wischermotors (26) errechnet und den Istwert durch eine Lagerregelung auf den Sollwert einstellt.

7. Wischeranlage (10) nach einem der vorhergehenden Ansprüche 1-5, **dadurch gekennzeichnet, dass** für die Wischgeschwindigkeiten des zweiten Wischermotors (28) ein Leistungsschalter (42) vorgesehen ist, der von der Steuereinheit (34) angesteuert wird.

8. Wischeranlage (10) nach einem der vorhergehenden Ansprüche 1-5, 7, **dadurch gekennzeichnet, dass** der zweite Wischermotor (28) ein permanenterregter Dreibürsten-Gleichstrommotor mit einer Getriebestufe ist.

9. Wischeranlage (10) nach Anspruch 5, **dadurch gekennzeichnet, dass** die Wischgeschwindigkeiten des zweiten Wischermotors (28) über die Bürstenbestromung geregelt werden.

10. Wischeranlage (10) nach einem der vorhergehenden Ansprüche 1-5, 7-9, **dadurch gekennzeichnet, dass** der erste Wischermotor (26) auf der Fahrerseite eines Fahrzeugs und der zweite Wischermotor (28) auf der Beifahrerseite angeordnet sind.

## Claims

1. Wiper system (10) with two windscreen wipers (12, 14) and two wiper motors (26, 28) which drive the windscreen wipers (12, 14) and of which at least a first wiper motor (26) is assigned an electronic control unit (34) and a sensor (36), at least the control unit (34) receiving information about parameters of the other wiper motor (28), and the second wiper motor (28) being designed as a rotary motor, **characterized in that** the second wiper motor (28) does not have a control unit but rather only has a sensor (36) for detecting the absolute and relative rotational position of its output shaft (32), which sensor generates corresponding signals for the control unit (34) of the first wiper motor (26), and the first wiper motor (26) is controlled in terms of the rotational speed and the rotational position of its output shaft (32) by the control unit (34) as a function of the rotational position and the rotational speed of the output shaft (32) of the second wiper motor (28).

2. Wiper system (10) according to Claim 1, **characterized in that** the first wiper motor (26) is designed as a reversing motor.

3. Wiper system (10) according to one of the preceding claims, **characterized in that** the sensor (36) for detecting the rotational position and the rotational speed of the output shaft (32) comprises segmented permanent magnets (62, 64) with associated Hall sensors which generate a signal for a parking position of the windscreen wiper (12, 14) and the counting pulses for the incremental recognition of the rotational position and for determining the rotational speed.

4. Wiper system (10) according to either of Claims 1 or 2, **characterized in that** the sensor (36) for detecting the rotational position and the rotational speed of the output shaft (32) comprises an absolute transmitter, preferably an AMR sensor (anisotropic magnetoresistive).

5. Wiper system (10) according to either of Claims 1 or 2, **characterized in that** the sensor (36) for detecting the rotational position and the rotational speed of the output shaft (32) comprises a segmented, three-track contact disc with sliding contacts which are arranged on a component rotating with the output shaft (32).

6. Method for operating a wiper system (10) according to one of the preceding claims, **characterized in that** the control unit (34) calculates from the rotational position and/or rotational speed of the output shaft (32) of the second wiper motor (28) a desired value for the rotational position and/or rotational speed of the output shaft (30) of the first wiper motor (26) and sets the actual value to the desired value by controlling the bearings.

7. Wiper system (10) according to one of the preceding claims 1 - 5, **characterized in that** a power switch (42) which is activated by the control unit (34) is provided for the wiping speeds of the second wiper motor (28).

8. Wiper system (10) according to one of the preceding claims 1-5, 7, **characterized in that** the second wiper motor (28) is a permanently excited three-brush D.C. motor with a gear stage.

9. Wiper system (10) according to Claim 5, **characterized in that** the wiping speeds of the second wiper motor (28) are controlled via the energizing of the brushes.

10. Wiper system (10) according to one of the preceding claims 1-5, 7-9, **characterized in that** the first wiper motor (26) is arranged on the driver's side of a vehicle and the second wiper motor (28) is arranged on the passenger's side.

## Revendications

1. Installation d'essuie-glace (10) pourvu de deux essuie-glaces (12, 14) et de deux moteurs d'essuie-glace (26, 28) qui entraînent les essuie-glaces (12, 14), une unité de commande électronique (34) et un capteur (36) étant associés à au moins un premier moteur d'essuie-glace (26), l'unité de commande (34) au moins recevant des informations sur les paramètres de l'autre moteur d'essuie-glace (28) et le deuxième moteur d'essuie-glace (28) étant conçu en tant que moteur rotatif,
**caractérisée en ce que**
le deuxième moteur d'essuie-glace (28) ne comporte aucune unité de commande, mais uniquement un capteur (36) qui détecte la position de rotation absolue et relative de son arbre de sortie (32) et qui génère des signaux correspondants pour l'unité de commande (34) du premier moteur d'essuie-glace (26), et en fonction de la position de rotation et de la vitesse de rotation de l'arbre de sortie (32) du deuxième moteur d'essuie-glace (28), l'unité de commande (34) règle la vitesse de rotation et la position de rotation de l'arbre de sortie (30) du premier moteur (26).

2. Installation d'essuie-glace (10) selon la revendication 1,
**caractérisée en ce que**
le premier moteur d'essuie-glace (26) est un moteur à mouvement réversible.

3. Installation d'essuie-glace (10) selon l'une quelconque des revendications précédentes,
**caractérisée en ce que**
pour détecter la position de rotation et la vitesse de rotation de l'arbre de sortie (32) le capteur (36) comprend des aimants permanents segmentés (62, 64) avec des capteurs Hall associés qui génèrent un signal pour une position de rangement de l'essuie-glace (12, 14) et les impulsions de comptage pour la détection incrémentiale de la position de rotation et pour la détermination de la vitesse de rotation.

4. Installation d'essuie-glace (10) selon l'une quelconque des revendications 1 ou 2,
**caractérisée en ce que**
pour la détection de la position de rotation et de la vitesse de rotation de l'arbre de sortie (32) le capteur (36) comprend un indicateur de valeur absolue, de préférence un capteur AMR (magnétorésistif anisotrope).

5. Installation d'essuie-glace (10) selon l'une quelconque des revendications 1 ou 2,
**caractérisée en ce que**
pour détecter la position de rotation et la vitesse de rotation de l'arbre de sortie (32) le capteur (36) comprend une plaquette de contact segmentée à trois voies avec des contacts par frottement disposés sur un composant pivotant avec l'arbre de sortie (32).

6. Procédé de fonctionnement d'une installation d'essuie-glace (10) selon l'une quelconque des revendications précédentes,
**caractérisé en ce que**
l'unité de commande (34) calcule une valeur de consigne pour la position de rotation et/ou la vitesse de rotation de l'arbre de sortie (30) du premier moteur d'essuie-glace (26) à partir de la position de rotation et/ou de la vitesse de rotation de l'arbre de sortie (32) du deuxième moteur d'essuie-glace (28), et règle la valeur réelle sur la valeur de consigne par une régulation du palier.

7. Installation d'essuie-glace (10) selon l'une quelconque des revendications précédentes 1-5,
**caractérisée en ce qu'**
un commutateur de puissance (42) commandé par l'unité de commande (34) est prévu pour les vitesses d'essuyage du deuxième moteur d'essuie-glace (28).

8. Installation d'essuie-glace (10) selon l'une quelconque des revendications précédentes 1-5-7,
**caractérisée en ce que**
le deuxième moteur d'essuie-glace (28) est un moteur à courant continu à trois balais à excitation permanente équipé d'un réducteur.

9. Installation d'essuie-glace (10) selon la revendication 5,
**caractérisée en ce que**
les vitesses d'essuyage du deuxième moteur d'essuie-glace (28) sont régulées via l'alimentation en courant des balais.

10. Installation d'essuie-glace (10) selon l'une quelconque des revendications précédentes 1-5-7-9.
**caractérisée en ce que**
le premier moteur d'essuie-glace (26) est disposé sur le côté conducteur et le deuxième (28) sur le côté passager.
